(19) **Europäisches Patentamt / European Patent Office / Office européen des brevets**

(11) **EP 4 574 788 A1**

(12) **EUROPEAN PATENT APPLICATION**

(43) Date of publication:
25.06.2025 Bulletin 2025/26

(51) International Patent Classification (IPC):
C04B 7/52 (2006.01)  C04B 28/06 (2006.01)
C04B 28/08 (2006.01)  C04B 111/70 (2006.01)

(21) Application number: 23218883.9

(22) Date of filing: 20.12.2023

(52) Cooperative Patent Classification (CPC):
(C-Sets available)
C04B 28/065; C04B 7/527; C04B 28/06;
C04B 28/08; C04B 2111/00068; C04B 2111/70
(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Ecocem Materials Limited
Dublin 3 D03E0C0 (IE)

(72) Inventors:
• ALFANI, Roberta
75012 PARIS (FR)
• KACI, Yasmine
75012 PARIS (FR)
• GERMAIN, Stéphane
75012 PARIS (FR)

(74) Representative: Plasseraud IP
104 Rue de Richelieu
CS92104
75080 Paris Cedex 02 (FR)

(54) **HIGH-FLUIDITY CEMENTITIOUS COMPOSITION WITH A REDUCED WATER DEMAND**

(57) The invention concerns a high-fluidity cementitious composition comprising between 85% and 94% of a hydraulic binder (HB) and between 6% and 15% in dry weight of calcium aluminate cement (CAC),
said HB having a $d_{10}$ less than or equal to $1\mu m$, a $d_{50}$ comprised between $3.5\mu m$ and $4.5\ \mu m$ and a $d_{85}$ comprised between $12\mu m$ and $15\mu m$, and comprising:
a. between 1% and 40% in dry weight of at least one lime source;
b. between 5% and 69% in dry weight of at least on supplementary cementitious material;
c. between 30% and 90% in dry weight of at least one filler;
d. between 0.1% and 5% in dry weight, relative to the total weight of components a, b and c, of sulfate;

said filler being a particles mixture of:
- between 1% and 25% in dry weight, in respect with the total weight of the filler, of particles having a $d_{50}$ greater than or equal to $0,05\mu m$ and strictly less than $2\mu m$,
- between 75% and 99% in dry weight, in respect with the total weight of the filler, of particles having a $d_{50}$ greater than or equal to $2\mu m$ and strictly less than $200\mu m$.

(52) Cooperative Patent Classification (CPC): (Cont.)

C-Sets
**C04B 28/06, C04B 7/02, C04B 14/06, C04B 14/08,
C04B 14/14, C04B 14/22, C04B 14/28,
C04B 14/047, C04B 14/106, C04B 18/08,
C04B 18/141, C04B 18/146, C04B 20/008,
C04B 22/143, C04B 24/06, C04B 40/0028;
C04B 28/065, C04B 7/02, C04B 7/32, C04B 14/06,
C04B 14/022, C04B 14/28, C04B 18/141,
C04B 20/008, C04B 22/143, C04B 24/06,
C04B 40/0028;
C04B 28/08, C04B 7/02, C04B 7/32, C04B 14/06,
C04B 14/08, C04B 14/14, C04B 14/22,
C04B 14/28, C04B 14/047, C04B 14/106,
C04B 18/08, C04B 18/141, C04B 18/146,
C04B 20/008, C04B 22/143, C04B 24/06,
C04B 40/0028**

**Description**

**Technical Field**

This disclosure pertains to the field of hydraulic binder compositions comprising supplementary cementitious material (SCM) for preparing high-fluidity cementitious compositions. In particular, the technical field of the invention relates to hydraulic mineral binders with high fillers content and low amount of any lime source , such as Portland clinker, cement according to EN 197-1, EN 197-5, EN 197-6 natural hydraulic lime, hydraulic lime, hydrated lime and in general any source of lime and where SCM include Ground Granulated Blast Furnace Slag (GGBS or slag) or any other pozzolanic material, which are used in compositions able to set and harden, such as high-fluidity cementitious compositions and more specifically grouting mortars and high-performance concrete.

**Background Art**

High-fluidity cementitious compositions, enabling to prepare formulations, like grouting mortars, needs to combine very high fluidity with the capability of hardening and drying quickly. In particular grouting mortars needs to reach very high mechanical strengths of over 100 Mpa in less than 28 days.

To the knowledge of the applicants, high-fluidity cementitious compositions commercially available comprise, as the binder, Portland cement, combined with rapid cement, like aluminate and sulphoaluminate cement and a calcium sulfate source for fulfilling the requirement of quick hardening and quick drying.

Moreover, the calcium aluminate cement plays a major role to reach the required mechanical strength of hardened products obtained from high-fluidity cementitious compositions.

Even if these high-fluidity cementitious compositions give satisfaction, it is a major issue to limit the emission of carbon dioxide. For instance, Portland cement production has a strong and negative impact on the environment due to the emissions of large quantities of carbon dioxide. The production of cement inherently generates $CO_2$ during the calcination of the raw materials at very high temperature (1450°C) in a kiln through decarbonation of the limestone (Eq. (1)):

$$CaCOs\ (s) \rightarrow CaO\ (s) + CO_2\ (g) \qquad (Eq.\ (1))$$

In addition, carbon dioxide is released as a result of the combustion of the fossil fuels needed to heat the cement kiln. By adding the additional emissions of grinding, almost one ton of $CO_2$ per ton of Portland cement is obtained. Overall, the cement industry is responsible for about 7 to 9% of the global carbon dioxide emissions.

Most current research on new binders aims to replace cement in various applications by binders with lower environmental impact. One route is through using resources without their expensive treatment, such as by-products from other industries (waste for one industry, but primary resource for others). This is the case of blast-furnace slag which is a by-product of iron industry. By grinding this product into fine powder (GGBS) one can obtain a cementitious material that can be used in partial substitution of cement or used alone by adding some chemical activators.

Hydraulic binders based on these resources, and especially GGBS, are becomes very efficient. However, although these hydraulic binders have a great impact on $CO_2$ emissions, they may require water in an important amount for high fluidity application. It is important to note that the quantity of water needed is highly dependent on the type of high-fluidity cementitious composition. Indeed, for instance, the workability, the fluidity, the setting time or the elasticity required all depend on purpose of the high-fluidity cementitious composition. But, the quantity of water has an impact on the mechanical strength. Hence, it would be beneficial to propose a hydraulic binder that allows to obtain a workable high-fluidity cementitious composition that can reach required properties by limiting the amount of added water.

Moreover, the quick drying and the mechanical strength are brought by the aluminate cement part, which also generate emission of carbon dioxide. Thus, there is a need to develop grouting mortars in which Portland cement and aluminate cement are, at least partially, replaced by one or several components having a lower carbon dioxide impact.

In this context, the invention aims at addressing at least one of the above problems and/or needs, through fulfilling at least one of the following objectives:

-O1- Providing a supplementary cementitious material (SCM), such as GGBS, based binder or a high-fluidity cementitious composition including said GGBS-based binder, which is attractive substitute to Ordinary Portland Cement (OPC) and allow to reduce aluminate cement content.

-O2- Providing a slag-based binder or a high-fluidity cementitious composition including said GGBS-based binder, which is environmentally friendly.

-O3- Providing a slag-based binder or a high-fluidity cementitious composition including said GGBS-based binder, which gives rise to wet formulations with appropriate rheological properties, i.e stable rheology (good workability) during the usual setting time (e.g. from some minutes to several hours) required by the users of said wet formulation.

## Summary

At least one of the above objectives is reached thanks to a dry optimized high-fluidity cementitious composition, allowing to obtain high-fluidity mortars, comprising between 85% and 94% of a hydraulic binder (HB) and between 6% and 15% in dry weight of rapid cement, like calcium aluminate cement (CAC) and sulphoaluminate cement (CSA),

said HB having a $d_{10}$ less than or equal to $1\mu$m, a $d_{50}$ comprised between $3.5\mu$m and $4.5\ \mu$m and a $d_{85}$ comprised between $12\mu$m and $15\mu$m, and comprising:

    a. between 1% and 40% in dry weight of at least one lime source;

    b. between 5% and 69% in dry weight of at least on supplementary cementitious material;

    c. between 30% and 90% in dry weight of at least one filler;

    d. between 0.1 % and 5% in dry weight, relative to the total weight of components a, b and c, of sulfate;

said filler being a particles mixture of:

-    between 1% and 25% in dry weight, in respect with the total weight of the filler, of particles having a $d_{50}$ greater than or equal to $0{,}05\mu$m and strictly less than $2\mu$m,

-    between 75% and 99% in dry weight, in respect with the total weight of the filler, of particles having a $d_{50}$ greater than or equal to $2\mu$m and strictly less than $200\mu$m,

measurement of $d_{10}$, $d_{50}$ and $d_{80}$ being done by Laser diffraction analysis, also known as Laser diffraction spectroscopy, by means of Laser diffraction analyzer such as " SYMPATEC " and commercialized by the SYMPATEC company, with the dry way method.

The invention is also directed to a wet high-fluidity cementitious formulation comprising the dry high-fluidity cementitious composition mentioned above and water.

The invention further concerns a hardened high-fluidity cementitious product obtained from the wet high-fluidity cementitious formulation mentioned above.

The invention is in addition directed to a process for preparing the wet high-fluidity cementitious formulation mentioned above, comprising a step of mixing with water the dry high-fluidity cementitious composition as defined above, the dry high-fluidity cementitious composition being prepared before the mixing step or in situ during the mixing step the different components of the dry high-fluidity cementitious composition taken separately and/or under the form of premix(es).

## Definitions

According to the terminology of this text, the following non limitative definitions have to be taken into consideration:

"binder" refers to "hydraulic binder" meaning any material that hardens just by adding water, like cement.

Lime source is understood to be any source of lime including and not limiting to Portland clinker, cement, natural hydraulic lime, hydraulic lime, hydrated lime and in general any source of lime

"cement" is understood as meaning a powdery substance made for use in making mortar or concrete. They are mineral binders, possibly free from any organic compound. It refers to any ordinary cement and it includes Ordinary Portland Cement, blends of Ordinary Portland Cement, Pozzolanic materials and/or Filler and alkali-activated based cements.

"clinker" is understood as the main constituent phase of Ordinary Portland Cement obtained from the co-calcination of limestone and an aluminosilicate source.

"mortar" and "concrete" refers to a material composed of binder(s), aggregates such as filler, sand and other components, like admixtures.

"Dry high-fluidity binder for high fluidity cementitious formulation" refers to a material composed of binder(s), and other possible components, like admixtures.

"Wet high fluidity cementitious formulation" refers to a material composed of binder(s), aggregates such as sand and gravel and other components, like admixtures and water.

"Hardened high-fluidity cementitious product" refers to the hardened product obtained from wet high-fluidity cementitious composition after reaction and evaporation of the water.

"$d_{10}$" gives the median size of the granulometric distribution of material's particles (usually in micrometers for cementation materials). It means that 10% of the particles have a size less than the $d_{10}$ number and 90% of the particles have a size greater than the $d_{10}$ number. The measurement of $d_{10}$ is done by Laser diffraction analysis, also known as Laser diffraction spectroscopy, by means of Laser diffraction analyzer such as "SYMPATEC" and commercialized by the SYMPATEC company, with the dry way method.

"$d_{50}$" gives the median size of the granulometric distribution of material's particles (usually in micrometers for cementation materials). It means that 50% of the particles have a size less than the $d_{50}$ number and 50% of the particles have a size greater than the $d_{50}$ number. The measurement of $d_{50}$ is done by Laser diffraction analysis, also known as Laser diffraction spectroscopy, by means of Laser diffraction analyzer such as "SYMPATEC" and commercialized by the SYMPATEC company, with the dry way method.

"$d_{85}$" gives the median size of the granulometric distribution of material's particles (usually in micrometers for cementation materials). It means that 85% of the particles have a size less than the $d_{85}$ number and 15% of the particles have a size greater than the $d_{85}$ number. The measurement of $d_{85}$ is done by Laser diffraction analysis, also known as Laser diffraction spectroscopy, by means of Laser diffraction analyzer such as " SYMPATEC " and commercialized by the SYMPATEC company, with the dry way method.

"$d_{90}$" gives the median size of the granulometric distribution of material's particles (usually in micrometers for cementation materials). It means that 90% of the particles have a size less than the $d_{90}$ number and 10% of the particles have a size greater than the $d_{90}$ number. The measurement of $d_{90}$ is done by Laser diffraction analysis, also known as Laser diffraction spectroscopy, by means of Laser diffraction analyzer such as " SYMPATEC " and commercialized by the SYMPATEC company, with the dry way method.

**Detailed description**

*The dry high-fluidity cementitious composition*

According to the invention, "dry" high-fluidity binder for high fluidity cementitious composition refers to compositions that are in the form of powder and ready to be mixed with water. In other words, the dry high-fluidity cementitious composition of the invention may content some moisture, but it essentially contains solid components which are intended to be mixed with water before its application.
In some embodiments, the dry high-fluidity cementitious composition further comprises aggregates.
Aggregates comprise a large category of particulate material used in construction, including sands, gravels, crushed stones, slag (not-granulated), recycled concrete and geosynthetic aggregates. They serve as reinforcement to add strength to the overall composite material.
Advantageously, said dry high-fluidity cementitious composition can also include, apart from aggregates, one or several ingredients, especially functional admixtures, additions and fibres, which can be the same as the other optional component mentioned below defined in the detailed description of the hydraulic binder (HB).
In an embodiment, the high-fluidity cementitious composition is a grouting mortar.
In an embodiment, the high-fluidity cementitious composition is a high-performance concrete.

*The calcium aluminate cement (CAC)*

CAC are cements comprising as the main component monocalcium aluminate ($CaAl_2O_4$, $CaO.Al_2O_3$) and as minor component calcium silicates or calcium aluminates. CAC may also contain mayenite. CAC are labelled according to NF 14 647. In some embodiments, the CAC is rich in monocalcium aluminate (CA) and/or mayenite (C12A7).

In preferred embodiments, CAC is crystalline or amorphous. In another preferred embodiment CAC is a mixture of crystalline CAC and amorphous CAC.

*The Calcium Sulphoaluminate cement (CSA)*

The CSA cement may be a ye'elimite containing clinker and/or cement.

*The hydraulic binder (HB)*

According to the invention the hydraulic binder has a $d_{10}$ less than or equal to $1\mu m$, a $d_{50}$ comprised between $3.5\mu m$ and $4.5\ \mu m$ and a $d_{85}$ comprised between $12\mu m$ and $15\mu m$, and comprises:

    a. between 1% and 40% in dry weight of at least one lime source;

    b. between 5% and 69% in dry weight of ground granulated blast furnace slag;

    c. between 30% and 90% in dry weight of at least one filler;

    d. between 0.1% and 5% in dry weight, relative to the total weight of components a, b and c, of sulfate;

said filler being a particles mixture of:

-    between 1% and 25% in dry weight, in respect with the total weight of the filler, of particles having a $d_{50}$ greater than or equal to $0,05\mu m$ and strictly less than $2\mu m$,

-    between 75% and 99% in dry weight, in respect with the total weight of the filler, of particles having a $d_{50}$ greater than or equal to $2\mu m$ and strictly less than $200\mu m$,

measurement of $d_{10}$, $d_{50}$ and $d_{80}$ being done by Laser diffraction analysis, also known as Laser diffraction spectroscopy, by means of Laser diffraction analyzer such as "SYMPATEC" and commercialized by the SYMPATEC company, with the dry way method.

*The particle size distribution*

The binder composition according to the invention has a particle size distribution, in which the $d_{10}$ is less than or equal to $1\mu m$, the $d_{50}$ is comprised between $3.5\mu m$ and $4.5\ \mu m$ and the $d_{85}$ is comprised between $12\mu m$ and $15\mu m$.

In some embodiments, the hydraulic binder composition has a $d_{90}$ comprised between $17\mu m$ and $20\mu m$, measurement of $d_{90}$ being done by Laser diffraction analysis, also known as Laser diffraction spectroscopy, by means of Laser diffraction analyzer such as " SYMPATEC " and commercialized by the SYMPATEC company, with the dry way method.

In some embodiments, the hydraulic binder composition has a $d_{99}$ equal or less $38\mu m$, measurement of $d_{99}$ being done by Laser diffraction analysis, also known as Laser diffraction spectroscopy, by means of Laser diffraction analyzer such as " SYMPATEC" and commercialized by the SYMPATEC company, with the dry way method.

*The component a*

The binder composition according to the invention comprises between 1% and 40% in dry weight of a component a, which is a lime source, preferably, between 3% and 35%, more preferably between 5% and 30%.

Preferably, the lime source is Portland clinker, Portland cement or lime, such as hydraulic lime, natural hydraulic lime calcium hydroxide, slaked lime, quick lime and lime slurry, or a mixture thereof.

Typically, Portland clinker has a $D_{50}$ greater or equal to $11\mu m$ and a Blaine surface of less than or equal to 5500 $cm^2/g$, measurement of $D_{50}$ being done by Laser diffraction analysis, also known as Laser diffraction spectroscopy, by means of Laser diffraction analyzer such as " SYMPATEC " and commercialized by the SYMPATEC company, with the dry way method.

In case the lime source is Portland cement it is advantageous that at least a portion of the same is ultrafine cement having a $d_{50}$ lower than or equal to $8\mu m$, preferably lower than or equal to $3.5\mu m$, measurement of $d_{50}$ being done by Laser diffraction analysis, also known as Laser diffraction spectroscopy, by means of Laser diffraction analyzer such as " SYMPATEC " and commercialized by the SYMPATEC company, with the dry way method. This embodiment is advantageous since it allows obtaining increased compressive strength compared to the other embodiment.

*The component b*

The binder composition according to the invention comprises between 5% and 69% in dry weight of a component b, which is at least one supplementary cementitious material preferably, between 10% and 60%, more preferably between 15% and 50% and even more preferably between 20% and 40%.

Supplementary cementing materials (SCMs) are materials that contribute to the properties of hardened cement through hydraulic or pozzolanic activity. In an embodiment, the supplementary cementitious material is selected in the group comprising, preferably consisting in, slag cement such as ground, granulated blast-furnace slag (GGBS), and pozzolanic material such as silica fumes, natural pozzolan, volcanic ash, pumice, zeolitized tuff, argilised tuff, fly ashes, calcinated schists, metakaolin, calcined clays in particular illite, bentonite, montmorillonite, smectite, biomass ashes, rice husk ashes, diatomaceous earth, waste glass powder, grounded opal, carbonated basic oxygen furnace slag, carbonated olivine, carbonated wollastonite and mixtures thereof.

In some embodiment, the supplementary cementitious material is GGBS which may be a standard GGBS, ultrafine GGBS or a mixture thereof. Ultrafine GGBS is composed of particles having a $d_{50}$ greater than or equal to $1\mu m$ and strictly less than $5\mu m$.

*The component c*

The binder composition according to the invention comprises between 30% and 90% in dry weight of a component d, which is a filler preferably, between 30% and 80%, more preferably between 40% and 70%, even more preferably between 50% and 60%.

A filler is an inorganic material finely granulated which is inert. In other words a filler is not able to react with lime or cement, in the presence of water, so as to produce hydrates.

In an embodiment, the filler is a limestone filler, more preferably, the filler is a natural material sourcing from stonepit, such as calcite and its polymorphs, like aragonite or vaterite, marble powder, siliceous sands, recycled concrete fine aggregates and dolomite or precipitated calcium carbonates and mixtures thereof.

In another embodiment, the filler is biochar. Biochar is understood the solid residue obtained from the controlled thermal decomposition (pyrolysis) and gasification of biomass under limited oxygen notable control parameters are heating rate, temperature, feed rate, and residence time. Altering the aforementioned parameters and the choice and quality of feedstock affect the structure, chemical composition, and yield of biochar obtained. Biochar is black in color, but it displays a brown color when it is not concentrated, rich in carbon.

In yet another embodiment, the filler is a mixture of a limestone filler, as defined above and biochar.

According to the invention, the filler is a particles mixture of:

- between 1% and 25% in dry weight, in respect with the total weight of the filler, of particles having a $d_{50}$ greater than or equal to $0,05\mu m$ and strictly less than $2\mu m$,

- between 75% and 99% in dry weight, in respect with the total weight of the filler, of particles having a $d_{50}$ greater than or equal to $2\mu m$ and strictly less than $200\mu m$,

This filler partition, in combination with the particle size distribution of the binder in a whole, allows obtaining a technical effect of reducing the water needed to form a paste when mixing water with the hydraulic binder composition according to the invention.

In some embodiments the filler is a particles mixture of:

- between 3% and 20%, preferably between 5% and 15%, more preferably between 8% and 12% in dry weight, in respect with the total weight of the filler, of particles having a $d_{50}$ greater than or equal to $0,05\mu m$ and strictly less than $2\mu m$,

- between 80% and 97% preferably between 85% and 95%, more preferably between 88% and 92% in dry weight, in respect with the total weight of the filler, of particles having a $d_{50}$ greater than or equal to $2\mu m$ and less than $200\mu m$.

It is surprising that the binder of the invention, presenting a fine particle size distribution and comprising a filler, a part of which (between 1 and 25 dry weight %) having a $d_{50}$ greater than or equal to 0,05μm and strictly less than 2μm. Indeed, it is a general thought that the finer the binder particles, the more water needed.

*The component d*

According to the invention, the binder composition further comprises between 0.1% and 5% in dry weight, relative to the total weight of components a, b and c, of sulfate.

The content of sulfate is determined in respect with the distribution of components a, b and c. In other words, the dry weight percentage of the sulfate is determined by considering that the sum of contents of components a, b and c represents 100% in dry weight.

Preferably, the sulfate is from sodium sulfate, potassium sulfate, calcium sulfate, anhydrite, recycling gypse or mixture thereof, more preferably, the sulfate is from anhydrite, which is a natural anhydride calcium sulfate.

*Optional other components*

The hydraulic binder (HB) may further comprise up to 1 % in dry weight, relative to the total weight of components a, b and c, of at least one water reducer polymer.

The content of the water reducer polymer is determined in respect with the distribution of components a, b and c. In other words, the dry weight percentage of the water reducer polymer is determined by considering that the sum of contents of components a, b and c represents 100% in dry weight.

Preferably, the water reducing polymer is selected from the group consisting of lignosulfonate polymers, melamine sulfonate polymers, naphthalene sulfonate polymers, polycarboxylic acid ether polymers, copolymers derived from (meth)acrylic acid monomers like HPEG, IPEG and MPEG, copolymers derived from maleic acid monomers like APEG, polyoxyethylene phosphonates, vinyl copolymers like VPEG, zwitterionic polymers and mixtures thereof.

The hydraulic binder composition may also further comprise up to 5% in dry weight, relative to the total weight of components a, b and c, of at least one activator different from d.

The content of the activator different from d is determined in respect with the distribution of components a, b and c. In other words, the dry weight percentage of the activator is determined by considering that the sum of contents of components a, b and c represents 100% in dry weight.

Preferably, the activator different from d is an alkaline metal salt, preferably sodium chloride, calcium chloride, potassium chloride, lithium chloride, sodium carbonate, potassium carbonate, magnesium carbonate, calcium formiate, lithium carbonate, calcium nitrate, sodium nitrate, potassium nitrate, lithium nitrate, sodium nitrite, potassium nitrite, lithium nitrite, calcium nitrite, alkalin metal oxide, aluminium oxide, sodium thiocyanate, potassium thiocyanate, lithium thiocyanate, alkanolamines such as triethanolamine (TEA), triisopropanolamine (TIPA), diethanolamine (DEA) or mixture thereof, preferably calcium nitrate.

The binder composition is advantageously enriched with one or several other components which are ingredients, notably functional additives preferably selected in the following list:

- *Water retention agent.*
  A water retention agent has the property to keep the water of mixing before the setting. The water is so trapped in the wet formulation paste which improves its bond. To some extent, the water is less absorbed by the support.
  The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

- *Rheological agent*
  The possible rheological agent (also named a "thickener") is preferably chosen in the group comprising, more preferably consisting in: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

- *Defoamer/Antifoams*
  The possible defoamer is preferably chosen in the group comprising, more preferably consisting in: polyether polyols and mixes thereof.

- *Biocide*
  The possible biocide is preferably chosen in the group comprising, more preferably consisting in: mineral oxides like zinc oxide and mixes thereof.

- *Pigment*
  The possible pigment is preferably chosen in the group comprising, more preferably consisting in: $TiO_2$, iron oxide and mixes thereof.

- *Flame retardant*
  Flame retardant (or flame proof agent) makes it possible to increase the fire resistance and/or to shrink the speed of flame spreading of the composition.

- *Air-entraining agents*
  Air-entraining agents (surfactants) are advantageously chosen in the group comprising, more preferably consisting in, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting in the sulfonate olefins, the sodium lauryl sulfate and their mixes.

- *Retarders*
  Retarders are advantageously chosen in the group comprising, more preferably consisting in tartric acid and its salts: sodium or potassium salts, citric acid and its salts: sodium (trisodic citrate) and their mixes.

In addition, other components may be:

- *Plasticizers*

- *Fibres*

- *Dispersion powders*

- *Wetting agents*

- *Polymeric resins*

- *Complexing agents*

- *Drying shrinkage reducing agents based on polyols*

- *Lubricants.*

The total content of these optional other components in the binder composition is preferably comprised between 0,001% and 10% by weight of the total weight of the binder composition.

*The wet high-fluidity cementitious formulation*

The invention also refers to a wet high-fluidity cementitious formulation in particular grouting mortars and high-performance concretes, comprising the dry high-fluidity cementitious composition and water.

*The process for preparing wet high-fluidity cementitious formulation*

The invention also relates to a process for preparing the wet high-fluidity cementitious formulation described above comprising a step of mixing with water the hydraulic binder composition described above, the hydraulic binder composition being prepared before the mixing step or in situ during the mixing step the different components of the hydraulic binder composition taken separately and/or under the form of premix(es), and at least one aggregate and
In other words, wet high-fluidity cementitious formulation could be prepared by two distinct methods.
In a first method, the dry high-fluidity cementitious composition is prepared, and then mixed with water.
In a second method, the wet high-fluidity cementitious formulation is prepared by mixing in water each component of the dry high-fluidity cementitious composition.
According to the present disclosure, the term "mixing" has to be understood as any form of mixing.

In a preferred embodiment a part of the hydraulic binder (HB) of the dry high-fluidity cementitious composition and at least a part of the water are mixed together prior to the mixing with the aggregate.

In a preferred embodiment, the process is implemented with a weight ratio water to hydraulic binder (HB) and CAC comprised between 0.1 and 0.5, advantageously between 0.15 and 0.45, and more advantageously between 0.2 and 0.4.

*Hardened high-fluidity cementitious product*

The present invention also refers to hardened high-fluidity cementitious product obtained from the wet high-fluidity cementitious formulation described above.

**Examples**

*Example 1: the synergistic effect of the particle size distribution of the filler particle and the particle size distribution of the whole hydraulic binder*

Three hydraulic binder composition have been prepared. The compositions are set forth in table 1 below:

Table 1

| | | E1 | CE1 | CE2 |
|---|---|---|---|---|
| Component a (dry weight%): Portland cement | | 18.97 | 18.97 | 19.17 |
| Component b (dry weight%) | GGBS | 28.56 | 28.56 | 30.30 |
| Component c (dry weight%) | Ultrafine limestone filler (0.5 $\mu$m $\leq d_{50}$ < 2 $\mu$m) | 4.89 | 0 | 0 |
| | Fine Limestone filler (2 $\mu$m $\leq d_{50}$ < 6 $\mu$m) | 47.55 | 52.44 | 50.51 |
| Component d (dry weight% relative to components a, b and c total weight) $CaSO_4$ (anhydrite) | | 1.96 | 1.96 | 1.97 |
| $D_{10}$ of the binder | | 0.83 | 0.84 | 0.85 |
| $D_{50}$ of the binder | | 4.22 | 4.41 | 4.73 |
| $D_{85}$ of the binder | | 13.87 | 14.94 | 16.71 |

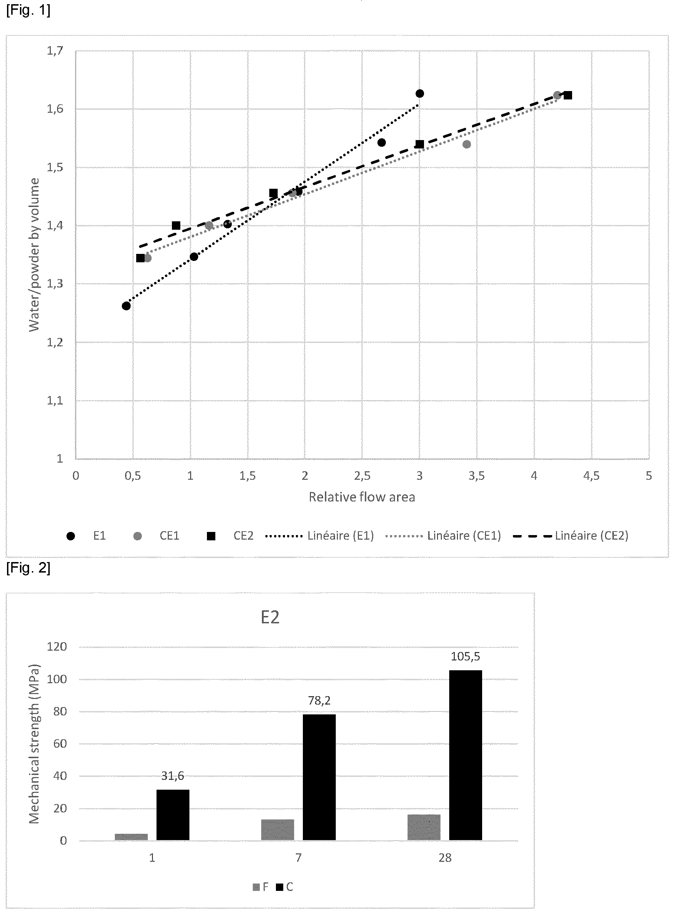

These three hydraulic binders have then been mixed with water. Then the water needed to wet the powder has been measured according to the Beta P test. Beta P test consists of a truncated cone shape mold filled by the paste, in two layers, and placed on a glass plate. Then, the mold is lifted, and the spread is measured, by means of its diameters, to obtain a mean value between 140 mm and 280 mm. The procedures are then repeated for other proportions of material and of water, until enough points are reached to display the linear relation of the Figure 1.

Then, through the measurements of the average diameters (D) of the spread, the relative flow area (R) is computed with eq1.

$$R = \frac{(D^2 - 100^2)}{100^2} \ldots \ldots \ldots (eq1)$$

According to figure 1, a linear relationship is obtained between the relative flow area and the ratio between the water volume and the powder volume.

The ratio between the water and powder is computed through eq 2, in which there is a clear dependency with the relative flow area (R).

$$V_W/V_P = \beta_P + R * E_p \ldots \ldots \ldots (eq2)$$

The $\beta_p$ represents the water ratio, which considers the water inside the pores of the material's particles and the interstitial one between the grains. Thus, it represents the minimum quantity of water needed for a powder to become a paste. While the EP, defined as the deformation coefficient, describes the sensitivity of the paste's fluidity with the variation of water content.

These three hydraulic binders have then been mixed with water. As can be seen on figure 1, the ratio of water/powder volume needed to form a paste with the binder according to the invention (E1) is of about 1.26, while the ratio/powder volume of water needed to form a paste with the binders outside the invention is of about 1.35 for both binder CE1 and CE2.

Binder CE1 does not contain filler particles having a $d_{50}$ greater than or equal to $0,05\mu m$ and strictly less than $2\mu m$, but has a $d_{10}$ less than or equal to $1\mu m$, a $d_{50}$ comprised between $3.5\mu m$ and $4.5 \mu m$ and a $d_{85}$ comprised between $12\mu m$ and $15\mu m$.

Binder CE2 neither contains filler particles having a $d_{50}$ greater than or equal to $0,05\mu m$ and strictly less than $2\mu m$, neither has a $d_{10}$ less than or equal to $1\mu m$, a $d_{50}$ comprised between $3.5\mu m$ and $4.5 \mu m$ and a $d_{85}$ comprised between $12\mu m$ and $15\mu m$.

As a result, the overall particle size distribution of the binder is not enough to reduce the quantity of water needed, the presence of a filler particles having a $d_{50}$ greater than or equal to $0,05\mu m$ and strictly less than $2\mu m$ in the quantity according to the invention is also mandatory.

*Example 2: Grouting mortar according to the invention*

Two wet grouting mortars have been prepared by mixing the components as detailed in table 2 below.

Table 2

| | | E2 | E3 |
|---|---|---|---|
| Component a (dry weight%): Portland cement | | 6.4 | 5.83 |
| Component b (dry weight%) | Standard GGBS ($d_{50}$ = 10 $\mu$m) | 5.36 | 4.88 |
| | Ultrafine GGBS ($d_{50}$ < 2.5 $\mu$m) | 4.08 | 3.72 |
| Component c (dry weight%) | Ultrafine limestone filler (0.5 $\mu$m $\leq d_{50}$ < 2 $\mu$m) | 1.64 | 1.5 |
| | Fine Limestone filler (2 $\mu$m $\leq d_{50}$ < 6 $\mu$m) | 15.85 | 14.45 |
| Component d (dry weight% relative to components a, b and c total weight) $CaSO_4$ (anhydrite) | | 2.81 | 3.18 |
| CAC | | 3,94 | 5.9 |
| Sand | | 59.35 | 59.97 |
| Compac C500 | | 0.3 | 0.3 |
| Lamberti defoamer 122 | | 0.04 | 0.04 |
| Tartric acid | | 0.02 | 0.02 |
| Water/binder ratio | | 0.21 | 0.21 |

Grouting mortars E2 and E3 present compressive strengths (C) and flexural strengths (F) at 1 day, 7 and 28 days on 4x4x16 cm prismatic specimens in accordance with standard 196-1.

The flexural strengths of grouting mortar E2 at 1, 7 and 28 days are 4.5 13 and 16 MPa respectively.

The compressive strengths of grouting mortar E2 at 1, 7 and 28 days are 31.6 78.2 and 105.5 MPa respectively.

The flexural strengths of grouting mortar E3 at 1, 7 and 28 days are 7, 12.1 and 15.6 MPa respectively.

The compressive strengths of grouting mortar E3 at 1, 7 and 28 days are 39.5, 65.2 and 89.4 MPa respectively.

**Claims**

1. Dry high-fluidity cementitious composition comprising between 85% and 94% of a hydraulic binder (HB) and between 6% and 15% in dry weight of rapid cement, like aluminate calcium aluminate cement (CAC) and sulphoaluminate cement (CSA)

   said HB having a $d_{10}$ less than or equal to $1\mu m$, a $d_{50}$ comprised between $3.5\mu m$ and $4.5 \mu m$ and a $d_{85}$ comprised between $12\mu m$ and $15\mu m$, and comprising:

   a. between 1% and 40% in dry weight of at least one lime source;
   b. between 5% and 69% in dry weight of at least on supplementary cementitious material;

c. between 30% and 90% in dry weight of at least one filler;
d. between 0.1% and 5% in dry weight, relative to the total weight of components a, b and c, of sulfate;

said filler being a particles mixture of:

- between 1% and 25% in dry weight, in respect with the total weight of the filler, of particles having a $d_{50}$ greater than or equal to 0,05$\mu$m and strictly less than 2$\mu$m,
- between 75% and 99% in dry weight, in respect with the total weight of the filler, of particles having a $d_{50}$ greater than or equal to 2$\mu$m and strictly less than 200$\mu$m,

measurement of $d_{10}$, $d_{50}$ and $d_{80}$ being done by Laser diffraction analysis, also known as Laser diffraction spectroscopy, by means of Laser diffraction analyzer such as " SYMPATEC " and commercialized by the SYMPATEC company, with the dry way method.

2. Dry high-fluidity cementitious composition according to claim 1, wherein the HB has a $d_{90}$ comprised between 17$\mu$m and 20$\mu$m,
measurement of $d_{10}$, $d_{50}$ and $d_{85}$ being done by Laser diffraction analysis, also known as Laser diffraction spectroscopy, by means of Laser diffraction analyzer such as " SYMPATEC " and commercialized by the SYMPATEC company, with the dry way method.

3. Dry high-fluidity cementitious composition according to anyone of the preceding claims, wherein the HB has a $d_{99}$ equal or less 38$\mu$m,
measurement of $d_{10}$, $d_{50}$ and $d_{85}$ being done by Laser diffraction analysis, also known as Laser diffraction spectroscopy, by means of Laser diffraction analyzer such as " SYMPATEC " and commercialized by the SYMPATEC company, with the dry way method.

4. Dry high-fluidity cementitious composition according to anyone of the preceding claims, wherein the lime source is Portland clinker, Portland cement or lime, such as hydraulic lime, natural hydraulic lime, calcium hydroxide, slaked lime, quick lime and lime slurry and a mixture thereof.

5. Hydraulic binder composition according to anyone of the preceding claims, wherein the supplementary cementitious material is selected in the group comprising, preferably consisting in, slag cement such as ground, granulated blast-furnace slag (GGBS), and pozzolanic material such as silica fumes, natural pozzolan, volcanic ash, pumice, zeolitized tuff, argilised tuff, fly ashes, calcinated schists, metakaolin, calcined clays in particular illite, bentonite, montmorillonite, smectite, biomass ashes, rice husk ashes, diatomaceous earth, waste glass powder, grounded opal, carbonated basic oxygen furnace slag, carbonated olivine, carbonated wollastonite and mixtures thereof.

6. Dry high-fluidity cementitious composition according to anyone of the preceding claims, wherein the filler is a natural material sourcing from stone-pit, such as calcite and its polymorphs, like aragonite or vaterite, and dolomite or precipitated calcium carbonates and mixtures thereof.

7. Dry high-fluidity cementitious composition according to anyone of the preceding claims, wherein the calcium aluminate cement is crystalline or amorphous.

8. Dry high-fluidity cementitious composition according to anyone of the preceding claims, wherein the sulfate is from sodium sulfate, potassium sulfate, calcium sulfate, anhydride sulfate, recycling gypse or mixture thereof.
[0102] Dry high-fluidity cementitious composition according to anyone of the preceding claims, wherein the water reducing polymer is present and is selected from the group consisting of lignosulfonate polymers, melamine sulfonate polymers, naphthalene sulfonate polymers, polycarboxylic acid ether polymers, copolymers derived from (meth) acrylic acid monomers like HPEG, IPEG and MPEG, copolymers derived from maleic acid monomers like APEG, polyoxyethylene phosphonates, vinyl copolymers like VPEG, zwitterionic polymers and mixtures thereof.

9. Dry high-fluidity cementitious composition according to anyone of the preceding claims, wherein the activator different from e. is present and is an alkaline metal salt, preferably sodium chloride, calcium chloride, potassium chloride, lithium chloride, sodium carbonate, potassium carbonate, magnesium carbonate, calcium formate, lithium carbonate, calcium nitrate, sodium nitrate, potassium nitrate, lithium nitrate, sodium nitrite, potassium nitrite, lithium nitrite, calcium nitrite, , alkalin metal oxide, aluminium oxide, sodium thiocyanate, potassium thiocyanate, lithium thiocyanate, alkanolamines such as triethanolamine (TEA), triisopropanolamine (TIPA), diethanolamine (DEA) or mixture thereof, preferably calcium nitrate.

10. Dry high-fluidity cementitious composition according to anyone of the preceding claims, wherein it further comprises aggregates.

11. Wet high-fluidity cementitious formulation comprising the dry high-fluidity cementitious composition according to anyone of the preceding claims and water.

12. Hardened high-fluidity cementitious product obtained from the wet high-fluidity cementitious formulation according to claim 11.

13. Process for preparing the wet high-fluidity cementitious formulation according to claim 11 comprising a step of mixing with water, the dry high-fluidity cementitious composition as defined in any one of claims 1 to 10, the dry high-fluidity cementitious composition being prepared before the mixing step or in situ during the mixing step the different components of the dry high-fluidity cementitious composition taken separately and/or under the form of premix(es).

14. Process according to claim 13, wherein the ratio water to hydraulic binder composition is comprised between 0.1 and 0.5, advantageously between 0.15 and 0.45, and more advantageously between 0.2 and 0.4.

[Fig. 1]

[Fig. 2]

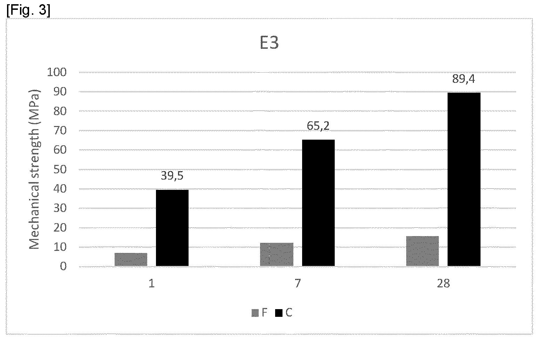

[Fig. 3]

## EUROPEAN SEARCH REPORT

Application Number

EP 23 21 8883

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 082 988 A1 (ECOCEM MAT LIMITED [IE] ET AL.) 2 November 2022 (2022-11-02) * paragraph [0011]; example E7; table 3 * | 1-14 | INV. C04B7/52 C04B28/06 C04B28/08 |
| Y | WO 2021/180594 A1 (SIKA TECH AG [CH]) 16 September 2021 (2021-09-16) * paragraphs [0039], [0073]; claim 1; example 10; table 5 * | 1-14 | ADD. C04B111/70 |
| A | US 2009/188409 A1 (SATO TAKAHIRO [JP]) 30 July 2009 (2009-07-30) * claims 1-14 * | 1-14 | |
| A | US 2014/299023 A1 (GUYNN JOHN M [US] ET AL) 9 October 2014 (2014-10-09) * paragraph [0145]; claims * | 1-14 | |
| A | WO 2015/193444 A1 (LAFARGE SA [FR]) 23 December 2015 (2015-12-23) * claims; examples * | 1-14 | |
| A | WO 2022/122848 A1 (IMERTECH [FR]) 16 June 2022 (2022-06-16) * claims; examples 3,6; tables B-F * | 1-14 | TECHNICAL FIELDS SEARCHED (IPC) C04B |

The present search report has been drawn up for all claims

| Place of search | Date of completion of the search | Examiner |
|---|---|---|
| The Hague | 11 July 2024 | Theodoridou, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 8883

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2024

| Patent document cited in search report | | Publication date | Patent family member(s) | | Publication date |
|---|---|---|---|---|---|
| EP 4082988 | A1 | 02-11-2022 | AR | 125737 A1 | 09-08-2023 |
| | | | AU | 2022265539 A1 | 09-11-2023 |
| | | | BR | 112023022455 A2 | 02-01-2024 |
| | | | CA | 3215469 A1 | 03-11-2022 |
| | | | CN | 117813273 A | 02-04-2024 |
| | | | EP | 4082988 A1 | 02-11-2022 |
| | | | EP | 4330208 A1 | 06-03-2024 |
| | | | JP | 2024516675 A | 16-04-2024 |
| | | | US | 2024190770 A1 | 13-06-2024 |
| | | | WO | 2022229433 A1 | 03-11-2022 |
| WO 2021180594 | A1 | 16-09-2021 | AR | 121536 A1 | 15-06-2022 |
| | | | AU | 2021234863 A1 | 06-10-2022 |
| | | | BR | 112022015178 A2 | 11-10-2022 |
| | | | CA | 3170961 A1 | 16-09-2021 |
| | | | CL | 2022002141 A1 | 31-03-2023 |
| | | | CN | 115151517 A | 04-10-2022 |
| | | | EP | 4118051 A1 | 18-01-2023 |
| | | | TW | 202134200 A | 16-09-2021 |
| | | | US | 2023142698 A1 | 11-05-2023 |
| | | | WO | 2021180594 A1 | 16-09-2021 |
| US 2009188409 | A1 | 30-07-2009 | CA | 2659051 A1 | 06-12-2007 |
| | | | JP | WO2007138648 A1 | 01-10-2009 |
| | | | US | 2009188409 A1 | 30-07-2009 |
| | | | WO | 2007138648 A1 | 06-12-2007 |
| US 2014299023 | A1 | 09-10-2014 | NONE | | |
| WO 2015193444 | A1 | 23-12-2015 | BR | 112016029622 A2 | 22-08-2017 |
| | | | CN | 106660878 A | 10-05-2017 |
| | | | EP | 3157883 A1 | 26-04-2017 |
| | | | ES | 2691215 T3 | 26-11-2018 |
| | | | FR | 3022541 A1 | 25-12-2015 |
| | | | US | 2017121227 A1 | 04-05-2017 |
| | | | WO | 2015193444 A1 | 23-12-2015 |
| WO 2022122848 | A1 | 16-06-2022 | EP | 4259435 A1 | 18-10-2023 |
| | | | JP | 2023552844 A | 19-12-2023 |
| | | | KR | 20230117421 A | 08-08-2023 |
| | | | US | 2024034680 A1 | 01-02-2024 |
| | | | WO | 2022122848 A1 | 16-06-2022 |
| | | | ZA | 202306055 B | 28-02-2024 |

EPO FORM P0459

For more details about this annex : see Official Journal of the European Patent Office, No. 12/82